# EUROPEAN PATENT APPLICATION

(11) **EP 4 806 958 A1**
(43) Date of publication of application: **16.09.2026**
(21) Application number: 25163810.2
(22) Date of filing: 14.03.2025
(51) Int. Cl.: C09D 4/00, C08G 61/00, C09D 4/06

(54) **CURABLE COMPOSITION FOR PROTECTIVE COATING**

(71) Applicant: Henkel AG & Co. KGaA, 40589 Düsseldorf (DE)
(72) Inventor: Sarcina, Fabio, 20125 Milan (IT); Salmoiraghi, Eleonora, 20018 Sedriano (MI) (IT); Signorile, Marco, 27010 Vellezzo Bellini (IT); Hartmann, Olaf, 40629 Düsseldorf (DE)

(57) **Abstract**

The present invention relates to a curable coating composition based on acetoacetate, and to its use in protective coating. In particular, the present invention relates to a curable coating composition comprising a multifunctional acetoacetate, a multifunctional (meth)acrylate, a monofunctional (meth)acrylate and a catalyst.

## Description

### Technical field

The present invention relates to a curable coating composition based on acetoacetate, and to its use in protective coating. In particular, the present invention relates to a curable coating composition comprising a multifunctional acetoacetate, a multifunctional (meth)acrylate and a monofunctional (meth)acrylate.

### Background of the invention

In the field of protective coatings, it is possible to define certain categories of products according to the elements that pose a threat to the integrity of a certain substrate. Examples could be abrasion, erosion, chemical attack, extreme temperatures, etc. When it comes to erosion, it generally occurs due to the flowing of fluids over the substrate. If such fluids contain particles, such as a slurry flowing into a pipe, it will impact on the surface and make the erosion even worse. Erosion phenomenon can also be observed on wind turbine blades due to rain impact and over turbine rotors due to cavitation. All these mentioned wear mechanisms has one thing in common: when the element that is damaging the surface carries a big energy, the impact generated must be absorbed by a protecting material that has the ability to dissipate the energy of the impact without transferring it to the substrate. In several industrial environment it is not possible to apply such material directly during the manufacturing of the equipment. Or, more often, the protective coating must be restored from time to time during the maintenance sessions. In addition, there are two fundamental aspects related to the application a protective coating: since it is generally carried out manually by human operators, it must be as free as possible of hazardous substances and is able to be applied easily, manually and quickly curing, in order to reduce the equipment downtime.

Protective coatings for shock absorption and related erosion protection are appliable manually and can cure rapidly without the need of additional heat. They are generally two-component polyurea or polyurethane liquid products. These materials show very high protective performances and are widely used in several industrial environments. The limitation of these two coating types lies in the fact that they contain isocyanates and/or amines, that poses a real concern to the health and safety of the operators.

When a coating is subjected to multiple impacts, a lot of stresses accumulates into the material and could lead to its rupture. When dealing with this type of stresses, very important factors include the ability to dissipate the energy impact by deformation, the ability to recover the initial shape in order to not accumulate the deformations after each impact, and the adhesion to the substrate that must be high enough to avoid the damage of the coating-substrate interface and lead to detachment of the product.

There is a strong need for developing a curable composition for protective coating which can solve the above-mentioned problems.

### Summary of the invention

This object is solved by a curable coating composition based on multifunctional acetoacetate compound and a combination of (meth)acrylate compounds.

In one aspect, the present invention relates to a curable coating composition, comprising:
a multifunctional acetoacetate compound,
a multifunctional (meth)acrylate compound,
a monofunctional (meth)acrylate compound, and
a catalyst,
wherein the molar equivalent ratio of the multifunctional (meth)acrylate compound to the monofunctional (meth)acrylate compound is more than 1.5.

In another aspect, the present invention relates to a two- or multiple-part curable coating composition, comprising,
a first part comprising a multifunctional acetoacetate compound, and
a second part comprising a multifunctional (meth)acrylate compound and a monofunctional (meth)acrylate compound,
wherein at least one of the first part and the second part further comprises a catalyst, and wherein the molar equivalent ratio of the multifunctional (meth)acrylate compound to the monofunctional (meth)acrylate compound is more than 1.5.

In yet another aspect, the present invention relates to the use of the curable coating composition or the two-part curable coating composition in producing a wind turbine blade.

Further preferred embodiments of the invention are set out in the claims.

In the present specification, the terms "a" and "an" and "at least one" are the same as the term "one or more" and can be employed interchangeably.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

"Essentially no (a substance)", as used herein, refers to the fact that the substance is not intentionally added in the formulating of the curable coating composition, only exists in a small amount in the curable coating composition and does not impair the performance of the coating composition. In a preferred embodiment, the curable coating composition comprises no such component. However, as a very small amount of such substance may unavoidably exist as for example impurity in the components added for purpose, in another embodiment, the curable coating composition comprises no more than 1%, preferably no more than 0.1% by weight of the composition of such substances.

If reference is made herein to a molecular weight of a polymer or its components, this reference refers to the average number molecular weight Mₙ, if not explicitly stated otherwise. The number average molecular weight Mₙ can be calculated based on end group analysis (OH numbers according to DIN 53240) or can be determined by gel permeation chromatography according to DIN 55672-1:2007-08 with THF as the eluent. If not stated otherwise, all given molecular weights are those determined by end group analysis. The weight average molecular weight M_{w} can be determined by GPC, as described for Mₙ.

All percentages given herein in relation to the compositions or formulations relate to weight % relative to the total weight of the respective composition or formula, if not explicitly stated otherwise.

According to the present invention, the curable coating composition comprises a multifunctional acetoacetate compound, a multifunctional (meth)acrylate compound, a monofunctional (meth)acrylate compound, and a catalyst.

The present invention provides a viable alternative to polyurethane/polyurea protective coatings without the need to use isocyanates or amines having potential health and regulatory concerns. Compared to silicone and shape memory polymer technologies, the mechanical strength of the inventive protective coating is remarkably higher, even without the need to use reinforcing fillers. Compared to flexible epoxies, the higher elongation and elastic behaviour provides a superior resistance to multiple impacts

The curable coating composition is formulated to provide a cured product exhibiting a tensile strength of 10 MPa or more as measured according to ASTM 638.

The curable coating composition is formulated to provide a cured product exhibiting an elongation at break of 200% or more as measured according to ASTM 638.

The curable coating composition is formulated to provide a cured product exhibiting a tear strength of 15 N/mm or more as measured according to ASTM D624.

In addition, the curable coating composition has other advantages. For example, the curable coating composition is solvent-free, has no health and safety concerns, has a workable viscosity and pot life and also cures quickly. Finally, the curable coating composition provides a strong coating material that is resistant to humidity and chemicals.

### Detailed description

According to the present invention, the curing of the coating composition undergoes Michael addition reaction mainly based on multifunctional (meth)acrylate compound as a Michael acceptor and multifunctional acetoacetate compound as Michael donor upon mixing with catalyst. The curable coating composition also comprises monofunctional (meth)acrylate compound as chain stopper to control the curing reaction and obtain the desired properties of cured product such as crosslinking density and mechanical strength. In the curing coating composition according to the present invention, the molar equivalent ratio of the multifunctional acetoacetate compound to the (meth)acrylate compounds (including the multifunctional (meth)acrylate compound and the monofunctional (meth)acrylate compound), i.e. the molar ratio of all acetoacetate functional groups in the multifunctional acetoacetate compound to all (meth)acrylate functional groups in the (meth)acrylate compounds is 0.7 or more, and preferably is from 0.7 to 1.5, preferably from 1.0 to 1.2, more preferably from 1.0 to 1.1.

### Multifunctional acetoacetate compound

According to the present invention, the multifunctional acetoacetate compound may have at least two acetoacetoxy groups, preferably 2 to 10 acetoacetoxy groups, and more preferably 2 to 4 acetoacetate groups. As such, this component may comprise either a single compound having at least two acetoacetoxy groups or a mixture of two or more compounds each having at least two acetoacetoxy groups. Each said compound should desirably be characterized by a number average molecular weight (Mn) of less than 12000 g/mol, for example less than 10000 g/mol or less than 6000 g/mol.

In a preferred embodiment, the curable coating composition comprises at least one acetoacetylated polyol, said acetoacetylated polyol being obtainable in accordance with the following equation (Reaction 1): 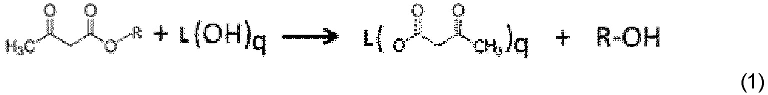 wherein:
R is a C₁-C₁₂ alkyl group;
L denotes the backbone structure of the polyol; and, $q \geq 2 .$

Reaction 1 above may be described as the transesterification - or more specifically the transacetylation - of a polyol with an acetoacetate compound as defined in Formula (I) below: 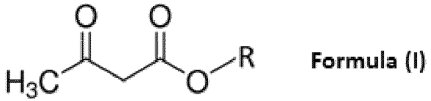 wherein R is said C₁-C₁₂ alkyl group. More typically, the constituent alkyl group R has from 1 to 8 and, preferably, from 1 to 6 carbon atoms. Exemplary alkyl acetoacetates include: t-butyl acetoacetate; isobutyl acetoacetate; n-butyl acetoacetate; isopropyl acetoacetate; n-propyl acetoacetate; ethyl acetoacetate; and, methyl acetoacetate. t-Butyl acetoacetate is preferred herein.

The polyol of Reaction 1 above is denoted by Formula (II) herein below:

L-(OH)_{q} Formula (II)

wherein q ≥ 2 and L denotes the backbone structure. Such polyols (II) may optionally include heteroatoms in their backbone or in pendent side chains. Further, the polyol (II) may be a monomeric polyhydric alcohol or may possess an oligomeric or polymeric backbone. Irrespective of this, it is preferred that the polyol (II) has a number average molecular weight (Mn) of less than 12000 g/mol; and, an hydroxyl functionality, q, of from 2 to 10, preferably from 2 to 4.

In one embodiment, the curable coating composition comprises an acetoacetylated polyol obtained from a monomeric polyhydric alcohol. Examples of suitable monomeric polyhydric alcohols include but are not limited to: 1,2-butanediol; 1,3-butanediol; 1,4-butanediol; 2,3-butanediol; 2,4-pentanediol; butyl ethyl propane diol; 1,4-hexanediol; 1,4-cyclohexane dimethanol; pentaerythritol; dipentaerythritol; trimethylolethane; trimethylolpropane; ditrimethylolpropane; tricyclodecane dimethanol; hydroquinone bis(2-hydroxyethyl) ether; alkylene glycols, such as ethylene glycol, diethylene glycol, propylene glycol, dipropylene glycol, butylene glycol, pentamethylene glycol, hexamethylene glycol, hexylene glycol and neopentyl glycol; glycerol; castor oil; castor wax; sugars such as glucose, sucrose, fructose, raffinose, maltodextrose, galactose, xylose, maltose, lactose, mannose and erythrose; sugar alcohols such as erythritol, xylitol, malitol, mannitol and sorbitol; and, hydroxyalkylated aliphatic diamines such as o,o'-bis(diethanolaminomethyl)-p-nonylphenol, N,N,N,N'-tetra(2-hydroxypropyl)ethylenediamine and N,N,N,N-tetra(2-hydroxyethyl)ethylenediamine. In a preferred embodiment, the multifunctional acetoacetate compound is an acetoacetylated polyol obtained from glycerol, trimethylolpropane, ethanol isosorbide, neopentylglycol, pentaerythritol, di-methylolpropane, di-pentaerythritol, propoxylated monosaccharides, trimethylol ethane, and a combination thereof. The multifunctional acetoacetate compound such as trimethylolpropane triacetoacetate can be obtained as Lonzamon from Arxada.

The present invention also does not preclude such multifunctional acetoacetate compound from comprising an acetoacetylated polyol obtained from an oligomeric or polymeric polyhydric alcohol. In particular, the polyol (II) may be selected from the group consisting of: polyoxyalkylene polyols, also called polyether polyols; polyester polyols, including polycaprolactone polyols; polyesteramide polyols; polycarbonate polyols; polybutadiene polyols; polyurethane polyols; polyacrylate polyols; and, combinations thereof. Desirably such oligomeric or polymeric polyols should be characterized by: a number average molecular weight (Mn) of at most 10000 g/mol and preferably from 250 to 6000 g/mol. Further, the use of one or more polyether polyols or polyester polyols as the starting material is of particular interest. And a commercial example of a polyether polyol is Voranol CP260 (available from DowDuPont).

As is known in the art, polyester polyols can be prepared from condensation reactions of polybasic carboxylic acids or anhydrides and a stoichiometric excess of polyhydric alcohols, or from a mixture of polybasic carboxylic acids, monobasic carboxylic acids and polyhydric alcohols. Suitable polybasic carboxylic acids and anhydrides for use in preparing the polyester polyols include those having from 2 to 18 carbon atoms and in particular those having from 2 to 10 carbon atoms. Non-limiting examples of such polybasic carboxylic acids and anhydrides include: adipic acid; glutaric acid; succinic acid; malonic acid; pimelic acid; sebacic acid; suberic acid; azelaic acid; 1,4-cyclohexane dicarboxylic acid; phthalic acid; phthalic anhydride; isophthalic acid; terephthalic acid; tetrahydrophthalic acid; hexahydrophthalic acid; and, combinations thereof. Monobasic carboxylic acids which can be used include those having from 1 to 18 carbon atoms or, preferably from 1 to 10 carbon atoms, of which the following examples might be mentioned: formic acid; acetic acid; propionic acid; butyric acid; valeric acid; caproic acid; caprylic acid; capric acid; lauric acid; myristic acid; palmitic acid; stearic acid; and, combinations thereof. Suitable polyhydric alcohols have from 2 to 18 carbon atoms and desirably from 2 to 10 carbon atoms. Exemplary polyhydric alcohols include, but are not limited to: ethylene glycol; propylene glycol; hexene-1,6-diol; trimethylol propane; glycerol; neopentyl glycol; pentaerythritol; butylene glycol; 2-methyl-1,3-propane diol; hexylene glycol; and, combinations thereof.

Polyether polyols may be produced by processes known in the art, such as the reaction of alkene oxides with polyhydric starter molecule in the presence of an appropriate catalyst, such as an alkali metal hydroxide, alkali metal alkoxide or antimony pentachloride. Examples of the alkene oxides include: tetrahydrofuran; ethylene oxide; 1,2-propylene oxide; 1,2- and 2,3-butylene oxide; and, styrene oxide. And examples of suitable starter molecules include but are not limited to: water; ethylene glycol; 1,2- and 1,3-propanediols; 1,4-butanediol; diethylene glycol; and, trimethylolpropane. Preferred polyether polyols for use herein are: poly(propylene oxide) polyol; poly(ethylene oxide) polyol; PTMEG; and, mixtures thereof.

Polycarbonate polyols for use herein can be selected from, but are not limited to polycarbonate diols. Such polycarbonate diols may be produced by the reaction of a diol with dialkyl or diaryl carbonates or phosgene. The reactant diols may be selected from, but are not limited to: 1,2-propanediol; 1,3-propanediol; 1,4-butanediol; 1,5-pentanediol; 1,6-hexanediol; diethylene glycol; trioxyethylene glycol; and, mixtures thereof. An exemplary diaryl carbonate is diphenyl carbonate.

The transesterification (transacetylation) Reaction 1 may be conducted by conventional methods as known in the art of polymer chemistry. Reference in this regard may be made to *inter alia:* Witzman et al. "Comparison of Methods for the Preparation of Acetoacetylated Coating Resins", Journal of Coatings Technology, Vol. 62, No. 789, October 1990; and, Witzeman et al. "Transacetoacetylation with tert-butyl acetoacetate: Synthetic Applications", J. Org. Chemistry 1991, 56, 1713-1718. Typically, the reaction between the oligomeric or polymeric polyol and the acetoacetate will involve mixing said polyol and acetoacetate in a suitable vessel, either with or without solvent, at an elevated temperature of, for example, from 50° to 200°C or from 80° to 150°C; preferably, the reaction is performed in the absence of solvent. The reaction is driven towards completion by distilling off the alcohol (R-OH) formed under reduced pressure. Moreover, the reaction can be conducted in the presence of a catalytic amount of a transesterification catalyst of which suitable examples include, but are not limited to, calcium acetate, zinc acetate, bismuth acetate, lead oxide and trichloroacetic acid.

The reaction should proceed to at least 99% conversion of the hydroxyl groups into acetoacetoxy functional groups: this degree of conversion can be monitored and confirmed by 1H-NMR and TLC. Whilst the reactants may be used in amounts such that one OH group is present for each acetoacetoxy group, it is also preferred to use a molar excess of the acetoacetate to ensure complete reaction.

Whilst the product of the above described transacetylation reaction may be used directly in the present curable coating composition, that reaction product may equally be first isolated and purified using methods known in the art. Mention in this regard may be made of extraction, evaporation, distillation and chromatography as suitable techniques.

In accordance with the present invention, the multifunctional acetoacetate compound may be employed in an amount of 1% to 40% by weight, preferably 5% to 15% by weight based on the total weight of the curable coating composition.

### Multifunctional (meth)acrylate compound

According to the present invention, the one or more multifunctional (meth)acrylate compounds have at least two (meth)acrylate groups, preferably 2 to 6 (meth)acrylate groups, and preferably 2 or 3 (meth)acrylate groups. The multifunctional (meth)acrylate compound may be a monomeric multifunctional (meth)acrylate compound or a multifunctional urethane (meth)acrylate oligomer.

Examples of the monomeric (meth)acrylates having two (meth)acrylate groups, i.e. bifunctional monomeric (meth)acrylates include 1,4-butane di(meth)acrylate, 1,6-hexane diacrylate, polypropylene diacrylate, 1,6-hexanediol di(meth)acrylate, 1,10-decanediol di(meth)acrylate, neopentyl diacrylate, neopentyl glycol di(meth)acrylate, 2,4-dimethyl-1,5-pentanediol di(meth)acrylate, butylethylpropanediol (meth)acrylate, ethoxylated cyclohexane methanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, neopentyl glycol hydroxypivalate di(meth)acrylate, EO-modified bisphenol A di(meth)acrylate, bisphenol F polyethoxy di(meth)acrylate, polypropylene glycol di(meth)acrylate, oligopropylene glycol di(meth)acrylate, 1,4-butanediol di(meth)acrylate, 2-ethyl-2-butyl-propanediol di(meth)acrylate, 1,9-nonane di(meth)acrylate, propoxylated ethoxylated bisphenol A di(meth)acrylate, and tricyclodecane di(meth)acrylate.

Examples of monomeric trifunctional (meth)acrylates include trimethylolpropane tri(meth)acrylate, trimethylolethane tri(meth)acrylate, alkyleneoxide-modified trimethylolpropane tri(meth)acrylates, pentaerythritol tri(meth)acrylate, dipentaerythritol tri(meth)acrylate, trimethylolpropane tri((meth)acryloyloxypropyl)ether, isocyanuric acid alkylene oxide-modified tri(meth)acrylates, dipentaerythritol propionate tri(meth)acrylate, tri((meth)acryloyloxyethyl)isocyanurate, hydroxypivalaldehyde-modified dimethylolpropane tri(meth)acrylate, sorbitol tri(meth)acrylate, propoxylated trimethylolpropane tri(meth)acrylate, and ethoxylated glycerin triacrylate.

Examples of monomeric tetrafunctional (meth)acrylates include pentaerythritol tetra(meth)acrylate, sorbitol tetra(meth)acrylate, ditrimethylolpropane tetra(meth)acrylate, dipentaerythritol propionate tetra(meth)acrylate, and ethoxylated pentaerythritol tetra(meth)acrylate.

Examples of monomeric pentafunctional (meth)acrylates include sorbitol penta(meth)acrylate and dipentaerythritol penta(meth)acrylate.

Examples of monomeric hexafunctional (meth)acrylates include dipentaerythritol hexa(meth)acrylate, sorbitol hexa(meth)acrylate, alkylene oxide-modified phosphazene hexa(meth)acrylates, and caprolactone-modified dipentaerythritol hexa(meth)acrylate.

The multifunctional urethane (meth)acrylate oligomer may be selected from a variety of materials, most desirably aliphatic urethane (meth)acrylate oligomers. Useful urethane (meth)acrylate oligomers include di- or polyfunctionalized urethane (meth)acrylate oligomers, which are capable of cross-linking during cure with multifunctional acetoacetate compounds.

Useful multifunctional urethane (meth)acrylate oligomers include aliphatic polyester urethane (meth)acrylates. Such oligomers generally may be described as the reaction product of a polyester polyol and a polyisocyanate. Other di-, or polyfunctional urethane (meth)acrylate oligomers useful in the present invention can be described as the acrylated reaction product of an aliphatic alcohol, such as polycarbonate polyol, a polyether polyol, or ethylene glycol monoacrylate, and a polyisocyanate.

Representative polyether polyols useful in preparing the urethane (meth)acrylate oligomers include straight or branched alkylene oxides having from one to twelve carbon atoms (C1-12), prepared by methods known in the art. Desirably, the polyether polyols have an average molecular weight, as determined by vapor pressure osmometry (ASTM-D 3592), sufficient to give the urethane (meth)acrylate oligomer a molecular weight of no less than 3000 g/mol. Examples include, without limitation, polytetramethylene polyol, polymethylene oxide polyol, polyethylene oxide polyol, polypropylene oxide polyol, polybutylene oxide polyol, tetrahydrofuran (THF)-sym-polyether polyol and combinations thereof.

Representative hydrocarbon polyols used to prepare the urethane (meth)acrylate oligomers also include hydrocarbon polyols, straight or branched, having a molecular weight sufficient to give the urethane (meth)acrylate oligomer a molecular weight of no less than 3000 g/mol. Non-limiting examples include fully or partially hydrogenated polybutadiene polyol, polybutadiene polyol hydrogenated to an iodine number of from 9 to 21, and fully or partially hydrogenated polyisobutylene polyol.

Representative polycarbonate polyols used to prepare the urethane (meth)acrylate oligomers include but are not limited to the reaction products of dialkyl carbonate with an alkylene diol, optionally copolymerized with alkylene ether diols.

The polyisocyanates used to prepare the urethane (meth)acrylate oligomers include aliphatic and aromatic polyisocyanates having from 4 to 20 carbon atoms. Representative aliphatic examples include isophorone diisocyanate, dicyclohexylmethane-4,4'-diisocyanate, 1,4-tetramethylene diisocyanate, 1,5-pentamethylene diisocyanate, 1,6-hexamethylene diisocyanate, 1,7-heptamethylene diisocyanate, 1,8-octamethylene diisocyanate, 1,9-nonamethylene diisocyanate, 1,10-decamethylene diisocyanate, 2,2,4-trimethyl-1,5-pentamethylene diisocyanate, 2,2'-dimethyl-1,5-pentamethylene diisocyanate, 3-methoxy-1,6-hexamethylene diisocyanate, 3-butoxy-1,6-hexamethylene, omega,omega'-dipropylether diisocyanate, 1,4-cyclohexyl diisocyanate, 1,3-cyclohexyl diisocyanate, trimethylhexylnethylene diisocyanate and combinations thereof.

Suitable catalysts for reacting the aliphatic alcohol with the polyisocyanate to form the urethane portion of the urethane (meth)acrylate oligomers include such materials as: dibutyl tin dilaurate, dibutyl tin oxide, dibutyl tin di-2-hexoate, stannous oleate and octoate, lead octoate, ferrous acetoacetate; and amines, such as triethylamine, diethylmethylamine, triethylenediamine, dimethylethylamine, morpholine, N-ethyl morpholine, piperzine, N,N-dimethyl benzylamine, N,N-dimethyl laurylamine and combinations thereof.

The urethane oligomers thus formed are endcapped with a (meth)acrylate-containing group to form the urethane (meth)acrylate oligomers. Suitable hydroxyl-terminated endcapping monomers include, without limitation, hydroxyalkyl (meth)acrylates, such as hydroxyethyl (meth)acrylate, hydroxypropyl (meth)acrylate, hydroxybutyl (meth)acrylate, and the like. Combinations of endcapping monomers may be employed.

In one embodiment, the multifunctional urethane (meth)acrylate oligomer is selected from a multifunctional polyester urethane (meth)acrylate oligomer, a multifunctional polyether urethane (meth)acrylate, a multifunctional polyester/polyether urethane (meth)acrylate, and combination thereof.

In another embodiment, the multifunctional urethane (meth)acrylate oligomer has a weight average molecular weight of from 500 g/mol to 50000 g/mol, preferably from 1000 g/mol to 10000 g/mol, and more preferably from 1500 g/mol to 8000 g/mol.

In another embodiment, the multifunctional urethane (meth)acrylate oligomer has two or three (meth)acrylate groups. In one preferred embodiment, a difunctional urethane (meth)acrylate oligomer is used in the curable coating composition for improving the flexibility of the cured product.

Commercially available urethane (meth)acrylate oligomers are such as Sartomer CN996, CN9001, CN981, CN9301 and CN9002 (available from Arkema).

In accordance with the present invention, the multifunctional (meth)acrylate compound is present in an amount of 40% to 95% by weight, preferably 50% to 90% by weight based on the total weight of the composition.

### Monofunctional (meth)acrylate compound

According to the present invention, the curable coating composition also comprises a monofunctional (meth)acrylate compound in combination with multifunctional (meth)acrylate compound. The monofunctional (meth)acrylate compound may be selected from monofunctional non-cyclic (meth)acrylate compound, monofunctional cyclic (meth)acrylate compound and combination thereof, and more preferably selected from a cycloaliphatic (meth)acrylate compound, heterocyclic (meth)acrylate compound, and combination thereof.

Examples of the monofunctional non-cyclic (meth)acrylate compound include ethyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, stearyl (meth)acrylate, isostearyl (meth)acrylate, 4-n-butylcyclohexyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, butoxymethyl (meth)acrylate, methoxypropylene monoacrylate, 3-methoxybutyl (meth)acrylate, alkoxymethyl (meth)acrylates, alkoxyethyl (meth)acrylates, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, diethyleneglycol monovinyl ether monoacrylate, hydroxyalkyl (meth)acrylates, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethoxysilylpropyl (meth)acrylate, trimethylsilypropyl (meth)acrylate, polyethylene oxide monomethyl ether (meth)acrylate, oligoethylene oxide monomethyl ether (meth)acrylate, polyethylene oxide (meth)acrylate, oligoethylene oxide (meth)acrylate, oligoethylene oxide monoalkyl ether (meth)acrylates, polyethylene oxide monoalkyl ether (meth)acrylates, dipropylene glycol (meth)acrylate, polypropylene oxide monoalkyl ether (meth)acrylates, oligopropylene oxide monoalkyl ether (meth)acrylates, 2-methacryloyloxyethylsuccinic acid, butoxydiethylene glycol (meth)acrylate, trifluoroethyl (meth)acrylate, perfluorooctylethyl (meth)acrylate, and EO-modified 2-ethylhexyl (meth)acrylate.

Examples of the monofunctional cyclic (meth)acrylate compound include cyclohexyl (meth)acrylate, bornyl (meth)acrylate, isobornyl (meth)acrylate, benzyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-methacryloyloxyhexahydrophthalic acid, 2-methacryloyloxyethyl-2-hydroxypropyl phthalate, 2-hydroxy-3-phenoxypropyl (meth)acrylate, EO-modified phenol (meth)acrylate, EO-modified cresol (meth)acrylate, EO-modified nonylphenol (meth)acrylate, PO-modified nonylphenol (meth)acrylate, tricyclodecanemethanol (meth)acrylate, tert-butylcyclohexanol (meth)acrylate; trimethylcyclohexanol (meth)acrylate; and cyclic trimethylopropane formal (meth)acrylate.

Preferably, the monofunctional (meth)acrylate compound is a cycloaliphatic (meth)acrylate compound and/or heterocyclic (meth)acrylate compound, and more preferably selected from tricyclodecanemethanol (meth)acrylate, isobornyl (meth)acrylate, cyclic trimethylopropane formal (meth)acrylate, and combination thereof.

According to present invention, the monofunctional (meth)acrylate compound is present in an amount of 0.5% to 30% by weight, preferably 1% to 15% by weight based on the total weight of the composition.

In the curable coating composition, the molar equivalent ratio of the the multifunctional (meth)acrylate compound to the monofunctional (meth)acrylate compound, i.e. the molar ratio of all (meth)acrylate functional groups in the multifunctional (meth)acrylate to all (meth)acrylate functional groups in the monofunctional (meth)acrylate is more than 1.4 or 1.5, and preferably more than 1.6 or more than 1.7 or more than 1.8 or more than 1.9 or more than 2, preferably from 2 to 10, more preferably from 2 to 8, and in particular from 2 to 6. When the molar equivalent ratio of the the multifunctional (meth)acrylate compound to the monofunctional (meth)acrylate compound is in the above ranges, an excellent balance of adhesion strength on metal substrate, cohesion strength and the flexibility of the cured product can be obtained.

### Catalyst

The catalyst is used in the present coating composition to generate the Michael addition reaction between the multifunctional acetoacetate compound and (meth)acrylate compounds having (meth)acrylate groups under a temperature such as from 15 to 80 °C, preferably at room temperature, i.e. 25 °C to form a coating material having high crosslinking density.

Examples of the suitable catalyst in the present invention are, among others, 1,5-diazabicyclo[4.3.0]non-5-ene (DBN), triazabicyclodecene (TBD), tetramethylguanidine (TMG), trioctylphosphine (TOP), triphenylphosphine (TPP), tetrabutylammonium hydroxide (TBAOH), sodium hydroxide, potassium hydroxide, sodium ethanolate, potassium ethanolate, phosphazanes and combination thereof.

In one embodiment, the molar ratio of the catalyst to the multifunctional acetoacetate compound is from 0.01 to 5, and preferably from 0.05 to 1. In addition, the catalyst is present in an amount of 0.05% to 2% by weight of the curable coating composition

### Two-part curable coating composition

The curable coating composition may include two or more parts/components. The ingredient(s) in each part is stored in a container (part) separate from the others until the contents of all the containers are mixed together to form the mixture of the coating composition prior to the application. Upon applying and curing, a solid material forms in the coating area.

In another aspect, the present invention is directed to a two-part curable coating composition, comprising:
a first part comprising a multifunctional acetoacetate compound, and
a second part comprising a multifunctional (meth)acrylate compound and a monofunctional (meth)acrylate compound,
wherein at least one of the first part and the second part further comprises a catalyst, and
wherein the molar equivalent ratio of the multifunctional (meth)acrylate compound to the monofunctional (meth)acrylate compound is more than 1.5.

### Additive

The curable coating compositions of the present invention may, of course, also contain standard additives for coating compositions such as pigments, plasticizers, levelling agents, foam suppressing agents, rheology control agents, anti-oxidants, tackifiers, adhesion promoters, epoxy resins and UV-stabilizers. The choice of appropriate additives and the usage amount is limited only in that these must be compatible with the other components of the composition and cannot be deleterious to the use of the composition in coating applications. In case of a two-part composition, the additives may be disposed in either part or both parts of the composition. On the other hand, the present curable coating composition comprises essentially no, preferably no additives which are not commonly used in protective coating materials such as fillers.

### Use

The present application also relates to the coating product of the curable coating composition and its use as protective coating for articles such as wind turbine rotor blade.

A typical wind turbine may include a tower with a nacelle mounted thereon. A plurality of rotor blades are mounted to a rotor hub, which is in turn connected to a main flange that turns a main rotor shaft. The wind turbine power generation and control components are housed within the nacelle. A rotor blade may include surfaces defining a pressure side and a suction side extending between a leading edge and a trailing edge, and may extend from a blade tip to a blade root. The rotor blade may include a plurality of individual blade segments aligned in an end-to-end order from the blade tip to the blade root. Each of the individual blade segments may be uniquely configured so that the plurality of blade segments define a complete rotor blade having a designed aerodynamic profile, length, and other desired characteristics.

The present invention thus also relates to a rotor blade assembly comprising a rotor blade and a cured protective coating according to the present invention. The protective coating may be configured on a surface of the rotor blade. In exemplary embodiments, the protective coating may be configured on the leading edge of the rotor blade. Further, in embodiments wherein the protective coating is configured on the leading edge, the coating may further extend at least partially onto the pressure side and/or the suction side, as desired to provide suitable erosion protection. Additionally or alternatively, the protective coating may be configured on any suitable surface or surfaces of the rotor blade, such as the pressure side, the suction side, the trailing edge, the tip, and/or the root. The protective coating may be configured on only a portion of the rotor blade along the length of the rotor blade in the generally span-wise direction.

The protective coating is a relatively thin and various forms and various application methods may be utilized. Thus, the protective coating of the present disclosure has a thickness of less than approximately 10 millimeters. Further, the protective coating may have a thickness of equal to or less than approximately 5 millimeters, equal to or less than approximately 2 millimeters, or in exemplary embodiments equal to or less than approximately 1 millimeter. The relatively thin protective coating of the present disclosure ensures that the coating does not add an undesirable amount of weight to the rotor blade, such that the stress on the rotor blade is not increased and the speed of the rotor blade is not decreased.

The present disclosure may be further understood with reference to the following examples. These examples are intended to be representative of specific embodiments of the disclosure and are not intended to be limiting to the scope of the disclosure.

### Examples

### Materials

AATMP is trimethylolpropane triacetoacetate obtained as Lonzamon from Arxada.

DBN is 1,5-diazabicyclo[4.3.0]non-5-ene obtained from Aldrich.

CN981 is an aliphatic urethane diacrylate with a functionality of 2 and a weight average molecular weight of 1900 g/mol, obtained from Sartomer.

CN996 is an aliphatic urethane diacrylate with a functionality of 2 and a weight average molecular weight of 1850 g/mol, obtained from Sartomer.

SR789 is tricyclodecanemethanol acrylate obtained from Sartomer.

Sarbio 5102 is isobornyl acrylate obtained from Sartomer.

SR531 is cyclic trimethylopropane formal acrylate obtained from Sartomer.

### Test methods

### Tensile strength

A tensile strength test was used to measure the elasticity of a material while under tensile strain according to ASTM 638. This test was conducted on an Instron universal testing machine. In this test, 3 to 5 dumbbell shape specimens of each curable coating composition were tested. The specimen was set so that the jaws of the universal testing machine grabbed from each extreme of the specimen. A pre-load of 2N was then applied. Then the jaws separated at a rate of 500 mm/min until the specimen failed. The maximum tensile strength achieved was then recorded as tensile strength.

### Elongation at break

A tensile strength test was used to measure the elasticity of a material while under tensile strain according to ASTM 638. This test was conducted on an Instron universal testing machine. In this test, 3 to 5 dumbbell shape specimens of each curable coating composition were tested. The specimen was set so that the jaws of the universal testing machine grabbed from each extreme of the specimen. A pre-load of 2N was then applied. Then the jaws separated at a rate of 500 mm/min until the specimen failed. The elongation ratio of the specimen at the moment that the specimen failed was then recorded.

### Tear Strength

A tear strength test was used to measure the elasticity of a material while under tensile strain according to ASTM D624. This test was conducted on an Instron universal testing machine. In this test, 3 to 5 Die B specimens (razor-nicked test piece with a crescent shape and with tab ends) of each curable coating composition were tested. The specimen was set so that the jaws of the universal testing machine grabbed from each extreme of the specimen. Then the jaws were separated at a rate of 500 mm/min to apply a tearing strain (and stress) to the test specimen without interruption at a constant rate of crosshead traverse until the specimen was completely torn. The tear strength of the specimen at the moment that the specimen failed was then recorded.

If the tensile strength of the cured coating material is no less than 10 MPa, it will be considered as acceptable for the protective coating, especially used in wind turbine rotor blade. If the elongation at break of the cured adhesive is no less than 200%, it will be considered as acceptable for the protective coating, especially used in wind turbine rotor blade. If the tear strength of the cured adhesive is no less than 15 N/mm, it will be considered as acceptable for the protective coating, especially used in wind turbine rotor blade.

### Comparative Example 1

16.9 g of AATMP and 0.67 g of DBN as Part A were mixed in a speed mixer at 3500 rpm for 3 min. 36.5 g of CN981, 35.5 g CN996 and 10.5 g SR531 were mixed in a speed mixer at 3500 rpm for 3 min and used as Part B. The two parts were mixed in a speed mixer at 2000 rpm for 1 min. The mixture was then spread on a teflon plate at an even thickness of 2 mm and cured at room temperature (25°C) for 7 days. The molar equivalent ratio of the difunctional (meth)acrylates to the monofunctional acrylate is 1.5. The test results of the cured coating showed a tensile strength of only 8.1 MPa, an elongation at break of 256% and a tear strength of only 13.2 N/mm.

### Example 1

15.5 g of AATMP and 0.63 g of DBN as Part A were mixed in a speed mixer at 3500 rpm for 3 min. 38.0 g of CN981, 37.0 g CN996 and 8.5 g Sarbio 5102 were mixed in a speed mixer at 3500 rpm for 3 min and used as Part B. The two parts were mixed in a speed mixer at 2000 rpm for 1 min. The mixture was then spread on a teflon plate at an even thickness of 2 mm and cured at room temperature (25°C) for 7 days The molar equivalent ratio of the difunctional (meth)acrylates to the monofunctional acrylate is 2.0. The test results of the cured coating showed a tensile strength of 19.9 MPa, an elongation at break of 285% and a tear strength of 16.6 N/mm.

### Example 2

14.8 g of AATMP and 0.59 g of DBN as Part A were mixed in a speed mixer at 3500 rpm for 3 min. 39.6 g of CN981, 38.6 g CN996 and 6.4 g SR789 were mixed in a speed mixer at 3500 rpm for 3 min and used as Part B. The two parts were mixed in a speed mixer at 2000 rpm for 1 min. The mixture was then spread on a teflon plate at an even thickness of 2 mm and cured at room temperature (25°C) for 7 days. The molar equivalent ratio of the difunctional (meth)acrylates to the monofunctional acrylate is 2.85. The test results of the cured coating showed a tensile strength of 20.8 MPa, an elongation at break of 230% and a tear strength of 26.3 N/mm.

### Example 3

14.9 g of AATMP and 0.60 g of DBN as Part A were mixed in a speed mixer at 3500 rpm for 3 min. 39.8 g of CN981, 38.8 g CN996 and 6.0 g SR531 were mixed in a speed mixer at 3500 rpm for 3 min and used as Part B. The two parts were mixed in a speed mixer at 2000 rpm for 1 min. The mixture was then spread on a teflon plate at an even thickness of 2 mm and cured at room temperature (25°C) for 7 days The molar equivalent ratio of the difunctional (meth)acrylates to the monofunctional acrylate is 2.85. The test results of the cured coating showed a tensile strength of 18.0 MPa, an elongation at break of 220% and a tear strength of 18.3 N/mm.

As demonstrated in the above test results, the inventive examples having appropriate ratio of multifunctional (meth)acrylate to monofunctional (meth)acrylate in the composition exhibited when cured as elastomeric coating an excellent combination of tensile strength, elongation at break and tear strength. However, the comparative example having a lower ratio of multifunctional (meth)acrylate to monofunctional (meth)acrylate in the composition exhibited unacceptable tensile strength and tear strength especially for using in wind turbine rotor blade.

## Claims

1. A curable coating composition, comprising:
a multifunctional acetoacetate compound,
a multifunctional (meth)acrylate compound,
a monofunctional (meth)acrylate compound, and
a catalyst,
wherein the molar equivalent ratio of the multifunctional (meth)acrylate compound to the monofunctional (meth)acrylate compound is more than 1.5.

2. The curable coating composition according to claim 1, wherein the multifunctional acetoacetate compound has at least two acetoacetate groups, preferably 2 to 10 acetoacetoxy groups, and more preferably 3 to 4 acetoacetoxy groups.

3. The curable coating composition according to claim 1 or 2, wherein the multifunctional (meth)acrylate compound has at least two (meth)acrylate groups, and preferably 2 to 6 (meth)acrylate groups, and in particular 2 or 3 (meth)acrylate groups.

4. The curable coating composition according to any of claims 1 to 3, wherein the multifunctional (meth)acrylate compound is a multifunctional urethane (meth)acrylate oligomer, preferably having a weight average molecular weight of from 500 g/mol to 50000 g/mol, preferably from 1000 g/mol to 10000 g/mol, and more preferably from 1500 g/mol to 8000 g/mol.

5. The curable coating composition according to any of claims 1 to 4, wherein the multifunctional urethane (meth)acrylate oligomer is selected from a multifunctional polyester urethane (meth)acrylate oligomer, a multifunctional polyether urethane (meth)acrylate, a multifunctional polyester/polyether urethane (meth)acrylate, and combination thereof.

6. The curable coating composition according to any of claims 1 to 5, wherein the monofunctional (meth)acrylate compound is selected from monofunctional non-cyclic (meth)acrylate compound, monofunctional cyclic (meth)acrylate compound and the combination thereof, preferably is a monofunctional cyclic (meth)acrylate compound selected from a monofunctional cycloaliphatic (meth)acrylate compound, monofunctional heterocyclo (meth)acrylate compound, and combination thereof, and more preferably selected from tricyclodecanemethanol (meth)acrylate, isobornyl (meth)acrylate, cyclic trimethylopropane formal (meth)acrylate, and combination thereof.

7. The curable coating composition according to any of claims 1 to 6, wherein the catalyst is selected from 1,5-diazabicyclo[4.3.0]non-5-ene, triazabicyclodecene, tetramethylguanidine, trioctylphosphine, triphenylphosphine, tetrabutylammonium hydroxide, sodium hydroxide, potassium hydroxide, sodium ethanolate, potassium ethanolate, phosphazanes and combination thereof, and preferably is 1,5-diazabicyclo[4.3.0]non-5-ene.

8. The curable coating composition according to any of claims 1 to 7, wherein the molar equivalent ratio of the multifunctional (meth)acrylate compound to the monofunctional (meth)acrylate compound is more than 1.6, preferably from 2 to 10, more preferably from 2 to 8, and in particular from 2 to 6.

9. The curable coating composition according to any of claims 1 to 8, wherein the multifunctional acetoacetate compound is present in an amount of 1% to 40% by weight, preferably 5% to 15% by weight based on the total weight of the composition.

10. The curable coating composition according to any of claims 1 to 9, wherein the multifunctional (meth)acrylate compound is present in an amount of 40% to 95% by weight, preferably 50% to 90% by weight based on the total weight of the composition.

11. The curable coating composition according to any of claims 1 to 10, wherein the monofunctional (meth)acrylate compound is present in an amount of 0.5% to 30% by weight, preferably 1% to 15% by weight based on the total weight of the composition.

12. A two- or multiple-part curable coating composition, comprising,
a first part comprising a multifunctional acetoacetate compound, and
a second part comprising a multifunctional (meth)acrylate compound and a monofunctional (meth)acrylate compound,
wherein at least one of the first part and the second part further comprises a catalyst, and
wherein the molar equivalent ratio of the multifunctional (meth)acrylate compound to the monofunctional (meth)acrylate compound is more than 1.5.

13. Cured coating product of the curable coating composition according to any of claims 1 to 11 or the two-part curable coating composition according to claim 12.

14. Use of the curable coating composition according to any of claims 1 to 12 or the two-part curable coating composition according to claim 13 in wind turbine rotor blade.

15. A rotor blade assembly for wind turbine comprising a rotor blade and a cured coating product according to claim 13.
